# EUROPÄISCHE PATENTANMELDUNG

(11) **EP 0 989 716 A1**
(43) Veröffentlichungstag der Anmeldung: **29.03.2000**
(21) Anmeldenummer: 99115655.5
(22) Anmeldetag: 07.08.1999
(51) Int. Cl.: H04M 1/72, H04M 1/725, H04M 1/66, H04M 3/428

(54) **Verfahren und Vorrichtung zum Verzögern des Gesprächsbeginns zu Fernsprechendgeräten**

(30) Priorität: 21.09.1998 DE 19845797
(71) Anmelder: Deutsche Telekom AG, 53113 Bonn (DE)
(72) Erfinder: Fischer, Kyrill Alexander, Dr., 64283 Darmstadt (DE)

(57) **Zusammenfassung**

Bei der Benutzung schnurloser Fernsprechendgeräte, insbesondere Mobilfunk-Endgeräte, kann nicht immer und an jedem Ort während der Zeit der Rufzeichen-Aussendung eine Verbindung aufgebaut werden. Es besteht deshalb die Aufgabe, den Gesprächsbeginn zu verzögern und die Notwendigkeit einer Verzögerung des Gesprächsbeginns an den Anrufenden zu signalisieren.

Die Lösung dieser Aufgabe besteht darin, daß von dem am sofortigen Sprechen gehinderten Angerufenen vor dem bzw. während des ankommenden Rufzeichens ein Zustandssignal eingegeben wird, das die Notwendigkeit und Dauer der Verzögerung des Verbindungsaufbaues bestimmt und daß aus diesem Zustandssignal während des bzw. nach einem ankommendem Rufzeichen eine Information über diesen Zustand erzeugt und an den Anrufenden übermittelt wird.

Anwendungsgebiete der Erfindung sind schnurlose Fernsprechendgeräte, insbesondere Mobilfunk-Endgeräte und Mobilfunknetze.

## Beschreibung

Die Erfindung bezieht sich auf ein Verfahren der im Oberbegriff des Patentanspruchs 1, und auf eine Vorrichtung der im Oberbegriff des Patentanspruchs 3 näher bezeichneten Art. Ein derartiges Verfahren ist von Untervermittlungen und Weichen allgemein bekannt.

Derartige Untervermittlungen und Weichen prüfen nachdem sie vom Anruf ausgelöst wurden, welcher Unteranschluß bzw. welches Gerät vom Anrufenden verlangt wird, bzw. welche Verbindung zu verändern ist und fordern den Anrufenden auf, evtl. auch verbunden mit Melodie-Einspiel, zu warten. Der Verbindungsaufbau ist mit dem Auslösen der Weiche bzw. Untervermittlung erfolgt und der Angerufene bzw. das gewünschte Gerät erhält ein neu erzeugtes Rufzeichen. Falls der gewünschte Teilnehmer bzw. das Gerät bereits anderweitig verbunden ist, wird der Anrufende informiert und zum weiteren Warten aufgefordert. Meldet sich ein verlangter Teilnehmer nach einigen der neu erzeugten Rufzeichen nicht, kann noch eine Verbindung zu Anrufbeantworter, Mailbox bzw. Mobilfunkgerät hergestellt werden.

Die Erfindung bezieht sich demgegenüber auf solche Geräte, bei denen ein Verbindungsaufbau erst durch Bestätigung der jeweiligen Empfangsstation zustande kommt, insbesondere auf Mobilfunkgeräte und über Funk gesteuerten Handapparate mit Tastatur. Wird ein solches Gerät nach einer relativ geringen Zahl von Rufzeichen nicht ausgelöst, wird der Anruf als in Abwesenheit gewertet und ggf. zur Mailbox umgeleitet.

Die gegenwärtig gebräuchlichen Mobilfunk-Endgeräte ( 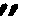 cellular phones", 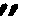 Handies") verfügen über verschiedene Möglichkeiten zur Signalisierung eines eingehenden Anrufes (senderseitiger Wunsch zum Verbindungsaufbau), die z. B. in Form von akustischen Zeichen (Klingeln, Piepsen) oder mechanischen Mitteilungen (Schnarren, das zu fühlbaren Vibrationen des Gerätes führt). Daraufhin kann der Angerufene (im folgenden: Empfänger) mit einer Gesprächsannahme oder nicht mit einer Gesprächsannahme reagieren. Wird die Verbindung empfängerseitig angenommen, so wird dies dem Anrufenden (im folgenden: Sender) durch eine Bestätigung des Verbindungsaufbaues mitgeteilt. Diese Bestätigung besteht im allgemeinen senderseitig in der Beendigung des akustischen Zeichens zum Abwarten des Verbindungsaufbaues und dem unmittelbar daran anschließenden Beginn der akustischen Übermittlung. Im allgemeinen kann damit das Gespräch (allgemein: die aktive Nutzung der Verbindung) sofort beginnen. Die sofortige Annahme des Gespräches nach Beendigung des Wartetones und damit erfolgter Bestätigung des Verbindungsaufbaues wird in der Praxis senderseitig vorausgesetzt.

Es sind in der Praxis aber auch solche Fälle anzutreffen, in denen zwar einerseits ein Verbindungsaufbau sofort möglich, wünschenswert und sinnvoll ist, d. h. die empfängerseitige Bestätigung der Verbindungsentgegennahme kann umgehend gesendet werden, andererseits aber die aktive Nutzung der dadurch aufgebauten Verbindung aus empfängerseitig vorliegenden Gründen noch nicht sofort, wohl aber nach einer kurzen Pause begonnen werden kann. Solche Gründe können vor allem im momentanen Empfangsort zu sehen sein.

Während sich z. B. der Empfänger als Zuhörer in einem Auditorium befindet, das durch die direkte Gesprächsaufnahme gestört würde oder als Fahrer in einem im Verkehr befindlichen Fahrzeug, von wo aus ein Gespräch in einigen Ländern verboten und sonst mindestens grob fahrlässig und gefährlich ist, wäre eine Pause zur Änderung des Empfangsortes, also Verlassen des Auditoriums bzw. unverzügliches Aufsuchen eines Halteplatzes erforderlich, die länger ist als die vorgesehene Rufzeit bis zur Annahme des Gesprächs. Der Anrufende erhält die Information, daß der Empfänger nicht erreichbar ist und kann allenfalls eine Nachricht bzw. Bitte um Rückruf auf Mailbox bzw. Anrufbeantworter hinterlassen, wenn er nicht bald selbst den Sendeort verlassen muß.

Die Erfindung hat deshalb die Aufgabe, den Anrufenden über die baldige Gesprächsbereitschaft des Angerufenen nach einer kurzen Pause zu informieren und dem Nutzer eines schnurlosen Endgerätes einen ähnlichen Komfort wie bekannte Weichen bzw. Untervermittlungen zu bieten.

Diese Aufgabe wird mit dem im Kennzeichen des Patentanspruchs 1 aufgeführten Verfahren sowie mit der im Kennzeichen des Patentanspruchs 3 benannten Vorrichtung gelöst.

Eine vorteilhafte Weiterbildungsmöglichkeit des Verfahrens ist aus dem Kennzeichen des Unteranspruches 2, und der Vorrichtung aus dem Kennzeichen des Patentanspruchs 4 ersichtlich.

Die Erfindung wird nachfolgend anhand von Ausführungsbeispielen näher erläutert.

Mit dem Verfahren und der Vorrichtung gemäß der Erfindung wird die Absicht des Empfängers signalisiert, die aktive Nutzung der zuvor aufgebauten Verbindung erst nach einer kurzen Pause zu beginnen. Diese Absicht soll senderseitig zum Abwarten bis zum Zeitpunkt einer günstigen Aufnahme der aktiven Verbindungsnutzung, also bis zur ungehinderten Möglichkeit des Beginns des Gesprächs führen. Die tatsächliche Dauer der senderseitig zu erwartenden Wartezeit hängt dabei von der zugrundeliegenden Technologie und der Art der Behinderung der Gesprächsbereitschaft ab. Sie kann beim Beispiel des Mobilfunks 30 bis 60 Sekunden betragen; sie kann aber noch vorteilhafter einstellbar gestaltet und in die Information integriert werden.

Die Erfindung umfaßt sowohl die Realisierungen in Form einer sofortigen Verbindungsaufnahme mit anschließender Signalisierung, als auch den Fall einer Realisierung durch gesonderte Signalisierung vor Beginn einer verzögerten Verbindungsannahme.

Die technische Umsetzung der Erfindung kann auf verschiedene Weise erfolgen. Das Auslösen der Signalisierung muß in jedem Fall empfängerseitig initiiert werden. Dies kann im Fall des Mobilfunk-Endgerätes durch Drücken einer speziell zu diesem Zweck vorgesehenen Taste erfolgen, wobei mit zweimaligem Drücken beispielsweise auch zweimal 30 Sekunden vorgegeben werden, oder über eine hierfür eingerichtete Tastenkombination erfolgen.

Mit Rücksicht darauf, daß die bekannten Mobilfunk-Endgeräte mehrere Rufzeichen bieten und auch die Rufzeichen der jeweiligen Situation angepaßt sein sollten, z. B. im Auditorium unaufdringlich leise, im Fahrzeug dagegen deutlich vom Verkehrslärm unterschiedlich, kann diese Tastenkombination bei bestimmten Rufzeichen auch zum Aktivieren der Verzögerungsinformation mit genutzt werden.

Die Signalisierung selbst kann prinzipiell einerseits empfängerseitig generiert werden, indem das Mobilfunk-Endgerät eigenständig einen geeigneten Signalton bzw. gespeicherten Text sendet, andererseits kann das Signal aber auch über eine entsprechend erweiterte Funktionalität des Netzbetreibers generiert werden, indem die Netzfunktionalität diese Funktion vorsieht, die vom Empfänger aus aktiviert wird und eine entsprechende Signalisierung an den Sender gibt. Hierzu könnte beispielsweise auch eine durch den Netzbetreiber bereitgestellte Sprachbox mit einer entsprechenden Ansage Verwendung finden.

Mit der Erfindung werden die Möglichkeiten der Netznutzung erweitert. Im Falle von Mobilfunk-Endgeräten wird auch in den geschilderten Situationen eine Benutzung ohne Beeinträchtigung Dritter möglich. Hierdurch wird die Akzeptanz und der effektive Einsatzspielraum des Mobilfunkeinsatzes erweitert.

## Patentansprüche

1. Verfahren zum Verzögern des Gesprächsbeginns zu Fernsprechendgeräten, bei welchem dem Anrufenden die Verzögerung des Verbindungsaufbaues signalisiert wird,
**dadurch gekennzeichnet**, daß von dem am sofortigen Sprechen gehinderten Angerufenen vor dem bzw. während des ankommenden Rufzeichens ein Zustandssignal eingegeben wird, das die Verzögerung des Verbindungsaufbaues bestimmt und daß aus diesem Zustandssignal während des bzw. nach einem ankommendem Rufzeichen eine Information über diesen Zustand erzeugt und an den Anrufenden übermittelt wird.

2. Verfahren nach Anspruch 1, dadurch gekennzeichnet, daß mit dem Zustandssignal die Notwendigkeit und Dauer der Verzögerung des Verbindungsaufbaues bestimmt wird.

3. Vorrichtung zum Verzögern des Gesprächsbeginns zu Fernsprechendgeräten, insbesondere Mobilfunkgeräten und über Funk gesteuerten Handapparaten mit Tastatur, **dadurch gekennzeichnet**, daß sie mit einer Einrichtung zur Informationsübermittlung über notwendige Verzögerungen der Sprechbereitschaft ausgerüstet ist, die mittels einer Taste bzw. Tastenkombination aktivierbar ist.

4. Vorrichtung nach Anspruch 2, dadurch gekennzeichnet, daß die Tastenkombination für die Einstellung der Art und Lautstärke des Rufzeichens um eine die Einrichtung zur Informationsübermittlung aktivierende Funktion erweitert ist.
